# EUROPÄISCHE PATENTSCHRIFT

(11) **EP 0 704 635 B1**
(45) Veröffentlichungstag und Bekanntmachung des Hinweises auf die Patenterteilung: **10.05.2000**
(21) Anmeldenummer: 95113106.9
(22) Anmeldetag: 21.08.1995
(51) Int. Cl.: F16C 33/10, F16C 17/18, F16C 33/04

(54) **Gerollte Buchse für Gleitlager**
Rolled sleeve for a plain bearing
Manchon roulé pour palier lisse

(30) Priorität: 30.09.1994 DE 4435098
(43) Veröffentlichungstag der Anmeldung: 03.04.1996
(73) Patentinhaber: KS Gleitlager GmbH, 68789 St. Leon-Rot (DE)
(72) Erfinder: Back, Karl, D-69234 Dielheim (DE); Becker, Karl, D-68789 St. Leon-Rot (DE); Bickle, Wolfgang, D-68799 Reilingen (DE); Storch, Thomas, D-68782 Brühl (DE)
(74) Vertreter: Dreiss, Fuhlendorf, Steimle & Becker

(56) Entgegenhaltungen:
- EP-A- 0 158 024
- DE-A- 2 347 548
- DE-A- 3 922 052
- FR-A- 1 310 614
- GB-A- 159 473
- GB-A- 1 174 660
- GB-A- 2 138 514
- GB-A- 2 245 674

## Beschreibung

Die Erfindung betrifft eine gerollte Buchse für Gleitlager, nach dem Oberbegriff des Anspruchs 1.

Bei zahlreichen Gleitlagerungen, beispielsweise in Kraftfahrzeugen, besteht die Forderung nach vollständiger Spielfreiheit über die gesamte Lebensdauer der Gleitlagerung.

Für diese Zwecke sind mehrere Bauarten von Gleitlagerbuchsen bekannt. So ist z.B. in der DE-A-24 06 658 eine federnde Lagerbuchse beschrieben, die abwechselnd in ihrer Umfangsrichtung einen Bereich kleineren Halbmessers, der federnd gegen die Umfangsfläche der Welle gedrückt wird und radial nach innen im Abstand von der inneren Peripherie des Gehäuses liegt, und einen Bereich größeren Halbmessers hat, der federnd gegen die innere Peripherie des Gehäuses gedrückt wird und radial nach außen im Abstand von der Umfangsfläche der Welle liegt. Die DE-A-23 47 548 beschreibt eine Gleitlagerbuchse, bei der auf der Außenseite und auf der Innenseite in Umfangsrichtung wechselweise Kunststoffpolster aufgebracht sind. Aus der WO 93/22574 ist eine Gleitlagerbuchse bekannt, deren Form im nicht eingespannten Zustand am Außendurchmesser und am Innendurchmesser von der kreisrunden Form abweicht. Diese abweichende polygonale Form wird erreicht durch gezielte Umformung und durch eine Dachform im Bereich der Stoßfuge. Diese Gleitlagerbuchse neigt beim Einpressen in ein Lagergehäuse zum Fressen im Bereich der geschlossenen Stoßfuge; insbesondere trifft dieses bei aus Leichtmetall gefertigten Lagergehäusen zu. Es ist weiter von Nachteil, daß eine solche Gleitlagerbuchse beim Einbau in das Lagergehäuse gezielt nach der Stoßfuge ausgerichtet werden muß; das hat einen erhöhten Montageaufwand zur Folge. Bei einer in der DE-A-39 22 052 beschriebenen wartungsfreien gerollten Gleitlagerbuchse nach dem Oberbegriff des Anspruchs 1 für Kraftwagen-Türscharniere ist mindestens die dem Scharnierstift zugeordnete Oberfläche der Gleitlagerbuchse mit einer durch zueinander parallel laufende, linienförmige Erhöhungen und Vertiefungen gebildete Profilierung versehen. Dadurch soll die Einhaltung engster Lagerspiele erreicht werden. Es ist jedoch von Nachteil, daß durch die linienförmigen Erhöhungen im Innendurchmesser die geforderte Spielfreiheit über die gesamte Lebensdauer der Gleitlagerbuchse nicht gewährleistet ist.

Aus der FR-A-1.310.614 ist eine Lagerbuchse aus Kunststoff bekannt, bei der in Längsrichtung oder zur Längsrichtung schräg geneigt verlaufenden Nuten 1 an der äußeren und inneren Mantelfläche zur besseren Verteilung von Schmiermittel und zum Aufnehmen von Vibrationen durch das drehbar gelagerte Organ vorgesehen sind.

Es ist die Aufgabe der vorliegenden Erfindung, eine gerollte Buchse für Gleitlager des eingangs beschriebenen Aufbaus bereitzustellen, mit der eine spielfreie Lagerung durch Spielausgleich zwischen der Lagergehäusebohrung und der Welle bzw. des Zapfens über die gesamte Lebensdauer der Lagerung erreichbar ist.

Die Lösung dieser Aufgabe erfolgt durch eine Buchse mit den Merkmalen des Anspruchs 1.

Die Erfindung ist in den nachfolgend näher erläuterten Zeichnung beispielhaft dargestellt.

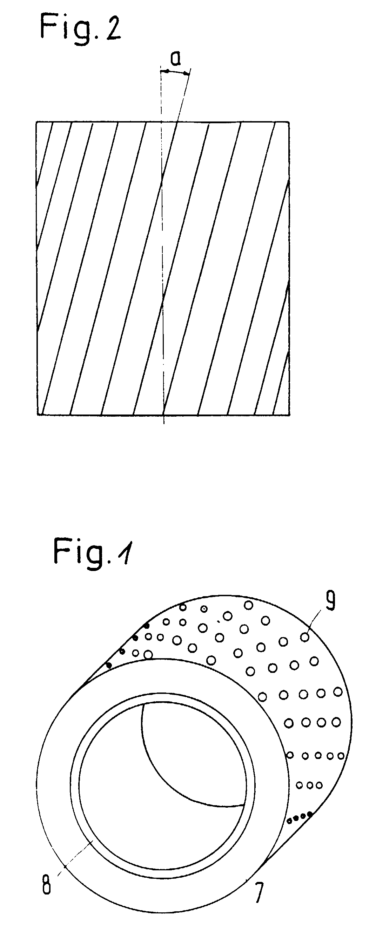

In der Fig. 1 ist die isometrische Darstellung einer gerollten Gleitlagerbuchse mit einer Wanddicke von 1,0 mm wiedergegeben. Auf einer Stützschicht (7) aus Stahl befindet sich eine Gleitschicht (8) eines wartungsfreien Gleitwerkstoffs. Die äußere Mantelfläche der Stützschicht (7) ist mit kegelstumpfförmigen, auf Linien angeordneten Erhöhungen (9) versehen. Die Linien verlaufen parallel unter einem Winkel von 20° zu einer die Längsachse der Gleitlagerbuchse einschließenden Ebene.

In Fig. 2 ist als Ausschnitt der Verlauf der Profilierung auf dem Außenmantel einer Gleitlagerbuchse dargestellt. Die Profilierung bildet einen Winkel (a) von 16° mit einer durch die Längsachse der Gleitlagerbuchse gelegten Ebene.

Für die Herstellung der erfindungsgemäß gestalteten gerollten Buchsen für Gleitlager eignen sich alle bekannten Gleitlagerwerkstoffe, wie diese beispielsweise in Technisches Handbuch, Kolbenschmidt AG, Heft 15, 1989, Seiten 3 bis 11, beschrieben sind.

Durch die erfindungsgemäße Profilierung der äußeren und/oder inneren Mantelfläche der gerollten Buchsen für Gleitlager ist sichergestellt, daß in allen Belastungsfällen eine ausreichende Abstützung sowohl gegen das Lagergehäuse als auch gegen die Welle bzw. den Zapfen vorhanden ist. Hierbei ist von besonderem Vorteil, daß die Stoßfuge der erfindungsgemäß ausgebildeten Buchse nicht gezielt in das Lagergehäuse eingepreßt werden muß.

## Patentansprüche

1. Gerollte Buchse für Gleitlager, hergestellt aus einem Bandabschnitt mit einer Stützschicht (1) aus Stahl und einer Gleitschicht (2) aus einem wartungsfreien bzw. wartungsarmen Gleitwerkstoff, die im eingebauten Zustand rund ist und die eine über die ganze Buchsenbreite verlaufende, im eingebauten Zustand geschlossene Stoßfuge besitzt **dadurch gekennzeichnet**, dass wenigstens die äußere Mantelfläche der Buchse ein über die ganze Buchsenbreite gehendes Profil aufweist, das aus auf parallel zueinander verlaufenden Linien angeordneten kegelstumpfförmigen Erhöhungen (9) besteht, wobei die Linien mit der Längsachse der Buchse einen Winkel von 1 bis 30° einschließen und wobei die Profiltiefe 0,01 bis 0,1 mm beträgt.

2. Gerollte Buchse nach Anspruch 1, dadurch gekennzeichnet, daß die innere Mantelfläche aus auf parallel zueinander verlaufenden Linien angeordneten, kegelstumpfförmigen Erhöhungen (9) besteht und die Linien mit der die Längsachse der Buchse einschließenden Ebene einen Winkel von 1 bis 30° bilden.

3. Gerollte Buchse nach nach einem der Ansprüche 1 und 2, dadurch gekennzeichnet, daß diese als Bundbuchse ausgeführt ist.

## Claims

1. A rolled sleeve for a plain bearing, produced from a coil section with a supporting layer (1) consisting of steel and a sliding layer (2) consisting of a maintenance free or low maintenance sliding material which, in its assembled state, is round in shape and comprising an open butt joint extending over the entire width of the sleeve, which in the assembled state is closed, and providing at least on the external sleeve casing a profile, characterised in that the profile consists of tapered protrusions (9) arranged in parallel lines, whereby the lines, together with the longitudinal axis of the sleeve, forms an angle of between 1 an 30° and the depth of profile amounts to 0,01 to 0.1 mm.

2. A rolled sleeve according to claim 1, characterised in that the internal casing surface consists of tapered protrusions (9) arranged in parallel lines, whereby the lines, together with the longitudinal sleeve axis, form an angle of between 1 and 30°.

3. A rolled sleeve according to one of the claims in 1 or 2, characterised in that the sleeve is shaped as a flanged sleeve.

## Revendications

1. Manchon roulé pour palier lisse, fabriqué à partir d'une section de laminé présentant une couche d'appui (1) en acier et une couche de glissement (2) en un matériau pour palier lisse sans maintenance ou à maintenance réduite, qui affecte, une fois installé, une forme ronde et présente, une fois installé, un joint fermé s'étendant sur toute la largeur du manchon, caractérisé en ce qu'au moins l'enveloppe externe du manchon présente un profil couvrant toute la largeur du manchon et défini par des bossages (9) tronconiques agencés sur des lignes parallèles entre elles, les lignes définissant avec l'axe longitudinal du manchon un angle compris entre 1 et 30° et le profil présentant une profondeur comprise entre 0,01 et 0,1 mm.

2. Manchon roulé selon la revendication 1, caractérisé en ce que l'enveloppe interne est définie par des bossages (9) tronconiques agencés sur des lignes parallèles entre elles et en ce que lesdites lignes forment avec le plan contenant l'axe longitudinal du manchon un angle de 1 à 30°.

3. Manchon roulé selon l'une des revendications 1 et 2, caractérisé en ce que ledit manchon est réalisé sous la forme d'un manchon à collet.
